(19) Europäisches Patentamt
European Patent Office
Office européen des brevets

(11) EP 3 767 719 A1

(12) EUROPEAN PATENT APPLICATION
published in accordance with Art. 153(4) EPC

(43) Date of publication:
20.01.2021 Bulletin 2021/03

(51) Int Cl.:
H01M 4/525 (2010.01)   C01G 53/00 (2006.01)
H01M 4/505 (2010.01)

(21) Application number: 19768101.8

(22) Date of filing: 13.03.2019

(86) International application number:
PCT/JP2019/010275

(87) International publication number:
WO 2019/177023 (19.09.2019 Gazette 2019/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 13.03.2018 JP 2018045954

(71) Applicant: SUMITOMO CHEMICAL COMPANY, LIMITED
Chuo-ku
Tokyo 104-8260 (JP)

(72) Inventors:
• TAKAMORI Kenji
  Fukui-shi, Fukui 910-3131 (JP)
• KURODA Tomoya
  Fukui-shi, Fukui 910-3131 (JP)

(74) Representative: Vossius & Partner
Patentanwälte Rechtsanwälte mbB
Siebertstrasse 3
81675 München (DE)

(54) **LITHIUM METAL COMPOSITE OXIDE POWDER, POSITIVE ELECTRODE ACTIVE MATERIAL FOR LITHIUM SECONDARY BATTERIES, POSITIVE ELECTRODE, AND LITHIUM SECONDARY BATTERY**

(57)    A lithium metal composite oxide powder including primary particles only or primary particles and secondary particles that are aggregates of the primary particles, wherein the lithium metal composite oxide is represented by composition formula (1) and satisfies all of requirements (A), (B) and (C):

$$Li[Li_x(Ni_{(i-y-z-w)}Co_yMn_zM_w)_{1-x}]O_2 \qquad (1)$$

wherein M is one or more metallic elements selected from the group consisting of Fe, Cu, Ti, Mg, Al, W, B, Mo, Nb, Zn, Sn, Zr, Ga, La and V, $-0.1 \le x \le 0 \le 0.2$, $0 \le y \le 0.4$, $0 \le z \le 0.4$, and $0 \le w \le 0.1$;
(A) a BET specific surface area is less than 2 m²/g;
(B) an average particle diameter of the primary particles is 1 μm or more; and
(C) a ratio of an alkali metal content (% by mass) excluding lithium based on a total mass of the lithium metal composite oxide powder is 0.1 or more and less than 50 with respect to a sulfate radical content (% by mass) based on a total mass of the lithium metal composite oxide powder.

EP 3 767 719 A1

## Description

TECHNICAL FIELD

The present invention relates to a lithium metal composite oxide powder, a positive electrode active material for a lithium secondary battery, a positive electrode, and a lithium secondary battery.

Priority is claimed on Japanese Patent Application No. 2018-045954, filed March 13, 2018, the contents of which are incorporated herein by reference.

DESCRIPTION OF RELATED ART

Lithium metal composite oxide powders are used as positive electrode active materials for lithium secondary batteries. Lithium secondary batteries have already been put to practical use not only as compact power supplies for portable telephones, notebook computers and the like, but also as medium- or large-sized power supplies for automobile use, electric power storage use, etc.

A lithium metal composite oxide powder contains impurities derived from raw materials. In a lithium secondary battery using such a lithium metal composite oxide powder as cathode active material, the impurities may cause defects such as poor coatability and battery swelling.

For example, Patent Document 1 describes a cathode active material that reduces the amount of impurities that do not contribute to the charge-discharge reaction and has excellent thermal stability. Specifically, Patent Document 1 describes a cathode active material having a sulfate radical content of 0.2 % by mass or less and a chlorine content of 0.1 % by mass or less.

Patent document 2 describes a lithium-nickel-cobalt-manganese composite oxide having a low amount of residual alkali present in the surface portion of the primary particles and excellent cycle performance.

Prior Art References

Patent Document

Patent Document 1: Japanese Unexamined Patent Application Publication No. 2015-122269
Patent Document 2: Japanese Unexamined Patent Application Publication No. 2011-124086

SUMMARY OF THE INVENTION

Problems to be Solved by the Invention

As the application fields of lithium secondary batteries are expanding, positive electrode active materials for lithium secondary batteries are required to have high processability for improving the productivity of lithium secondary batteries as well as to further improve battery performance.

The present invention has been made in view of the above-mentioned circumstances, and the object of the present invention is to provide a lithium metal composite oxide powder with a regulated amount of impurities derived from raw materials, a positive electrode active material for a lithium secondary battery using the same, a positive electrode, and a lithium secondary battery.

Means to Solve the Problems

Specifically, the present invention is as enumerated in [1] to [8] below.

[1] A lithium metal composite oxide powder including primary particles only or primary particles and secondary particles that are aggregates of the primary particles, wherein the lithium metal composite oxide is represented by composition formula (1) and satisfies all of requirements (A), (B) and (C):

$$Li[Li_x Ni_{(1-y-z-w)} Co_y Mn_z M_w)_{1-x}]O_2 \qquad (1)$$

wherein M is one or more metal elements selected from the group consisting of Fe, Cu, Ti, Mg, Al, W, B, Mo, Nb, Zn, Sn, Zr, Ga, La and V, $-0.1 \leq x \leq 0.2$, $0 \leq y \leq 0.4$, $0 \leq z \leq 0.4$, and $0 \leq w \leq 0.1$;

(A) a BET specific surface area is less than 2 m$^2$/g;

(B) an average particle diameter of the primary particles is1 $\mu$m or more; and

(C) a ratio of an alkali metal content (% by mass) excluding lithium based on a total mass of the lithium metal composite oxide powder is 0.1 or more and less than 50 with respect to a sulfate radical content (% by mass) based on a total mass of the lithium metal composite oxide powder.

[2] The lithium metal composite oxide powder according to [1], wherein a lithium carbonate content in residual alkali of the lithium metal composite oxide powder as measured by neutralization titration is 0.7 % by mass or less, based on a total mass of the lithium metal composite oxide powder, and a lithium hydroxide content in residual alkali of the lithium metal composite oxide powder as measured by neutralization titration is 0.7 % by mass or less, based on a total mass of the lithium metal composite oxide powder.

[3] The lithium metal composite oxide powder according to [1] or [2], wherein the alkali metal content excluding lithium based on a total mass of the lithium metal composite oxide powder is 0.001 % by mass or more and 0.05 % by mass or less.

[4] The lithium metal composite oxide powder according to any one of [1] to [3], wherein, with respect to 10 % cumulative diameter ($D_{10}$), 50 % cumulative diameter ($D_{50}$) and 90 % cumulative diameter ($D_{90}$) determined from particle size distribution measurement values, the 50 % cumulative diameter ($D_{50}$) is 2 $\mu$m or more and 15 $\mu$m or less, and a relationship of formula (D) is satisfied:

$$0.8 \leq (D_{90} - D_{10})/D_{50} \leq 3.5 \quad (D).$$

[5] The lithium metal composite oxide powder according to any one of [1] to [4], wherein a value obtained by dividing a water content (% by mass), based on a total mass of the lithium metal composite oxide powder, by the BET specific surface area (m$^2$/g) is 0.005 or more and 0.5 or less.

[6] A positive electrode active material for a lithium secondary battery, including the lithium metal composite oxide powder of any one of [1] to [5].

[7] A positive electrode including a positive electrode active material of [6].

[8] A lithium secondary battery including the positive electrode of [7].

Effect of the Invention

The present invention can provide a lithium metal composite oxide powder with less amount of impurities derived from raw materials, a positive electrode active material for a lithium secondary battery using the same, a positive electrode, and a lithium secondary battery.

BRIEF DESCRIPTION OF THE DRAWINGS

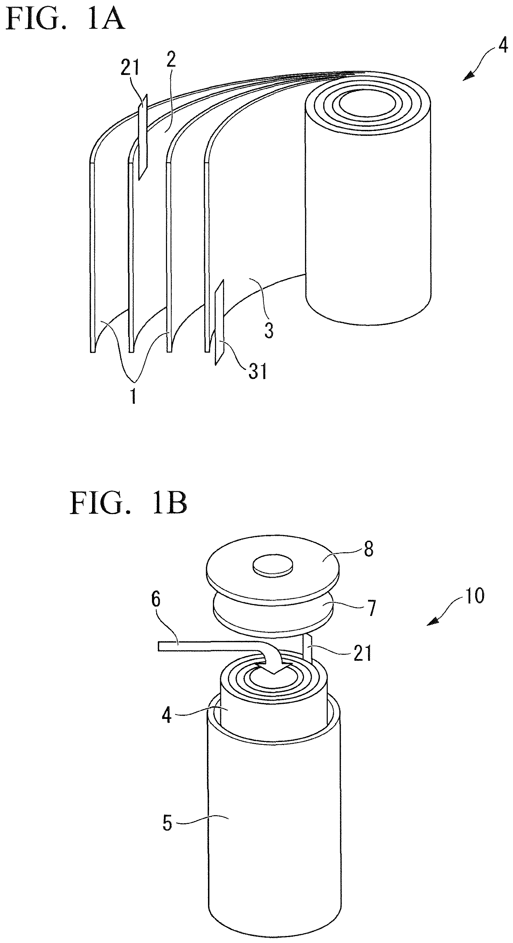

FIG. 1A is a schematic view showing one example of a lithium ion secondary battery.

FIG. 1B is a schematic view showing one example of a lithium ion secondary battery.

DESCRIPTION OF THE EMBODIMENTS

<Lithium metal composite oxide powder>

The present embodiment is related to a lithium metal composite oxide powder including primary particles only or primary particles and secondary particles that are aggregates of the primary particles. In the present embodiment, the lithium metal composite oxide is represented by the composition formula (1) below and satisfies all of the following requirements (A), (B) and (C):

$$Li[Li_x(Ni_{(1-y-z-w)}CoyMn_zM_w)_{1-x}]O_2 \quad (1)$$

wherein M is one or more metal elements selected from the group consisting of Fe, Cu, Ti, Mg, Al, W, B, Mo, Nb, Zn, Sn, Zr, Ga, La and V, $-0.1 \leq x \leq 0.2$, $0 \leq y \leq 0.4$, $0 \leq z \leq 0.4$, and $0 \leq w \leq 0.1$.

(A) a BET specific surface area is less than 2 $m^2/g$;

(B) an average particle diameter of the primary particles is1 $\mu$m or more; and

(C) a ratio of an alkali metal content (% by mass) excluding lithium based on a total mass of the lithium metal composite oxide powder is 0.1 or more and less than 50 with respect to a sulfate radical content (% by mass) based on a total mass of the lithium metal composite oxide powder.

The lithium metal composite oxide powder of the present embodiment may be composed only of (consist of) primary particles, or include primary particles and secondary particles that are aggregates of the primary particles.

In the context of the present specification, the term "primary particle" means the smallest unit observable as an independent particle by an electron microscope (e.g., a scanning electron microscope which is hereinafter also referred to as "SEM" or a transmission electron microscope which is hereinafter also referred to as "TEM"), which is a monocrystal or a polycrystal that is an assembly of crystallites.

In the context of the present specification, the term "secondary particle" means a particle that is an aggregate of primary particles, which can be identified by electron microscopy.

«Composition Formula (1)>>

The lithium metal composite oxide of the present embodiment is represented by formula (1) below:

$$Li[Li_x(Ni_{(1-y-z-w)}Co_yMn_zM_w)_{1-x}]O_2 \qquad (1)$$

wherein M is one or more metal elements selected from the group consisting of Fe, Cu, Ti, Mg, Al, W, B, Mo, Nb, Zn, Sn, Zr, Ga, La and V, $-0.1 \leq x \leq 0.2$, $0 \leq y \leq 0.4$, $0 \leq z \leq 0.4$, and $0 \leq w \leq 0.1$.

For obtaining a lithium secondary battery with higher cycle performance, x in the formula (1) is preferably more than 0, more preferably 0.01 or more, and still more preferably 0.02 or more. For obtaining a lithium secondary battery with higher initial coulombic efficiency, x in the formula (1) is preferably 0.1 or less, more preferably 0.08 or less, and still more preferably 0.06 or less.

The upper limit values and lower limit values of x can be arbitrarily combined.

For example, x is preferably more than 0 and 0.1 or less, more preferably 0.01 or more and 0.08 or less, and still more preferably 0.02 or more and 0.06 or less.

For obtaining a lithium secondary battery having low internal resistance, y in the composition formula (1) is preferably more than 0, more preferably 0.005 or more, even more preferably 0.01 or more, and particularly preferably 0.05 or more. For obtaining a lithium secondary battery with high thermal stability, y in the composition formula (1) is preferably 0.35 or less, and more preferably 0.33 or less.

The upper limit values and lower limit values of y can be arbitrarily combined.

For example, y is preferably more than 0 and 0.35 or less, more preferably 0.005 or more and 0.35 or less, still more preferably 0.01 or more and 0.33 or less, and particularly preferably 0.05 or more and 0.33 or less.

For obtaining a lithium secondary battery with higher cycle performance, z in the formula (1) is preferably 0.01 or more, more preferably 0.02 or more, and still more preferably 0.1 or more. For obtaining a lithium secondary battery with higher storage stability under high temperature conditions (e.g., at 60 °C), z in the formula (1) is preferably 0.4 or less, more preferably 0.38 or less, and still more preferably 0.35 or less.

The upper limit values and lower limit values of z can be arbitrarily combined.

For example, z is preferably 0.01 or more and 0.4 or less, more preferably 0.02 or more and 0.38 or less, and still more preferably 0.1 or more and 0.35 or less.

For obtaining a lithium secondary battery having low internal resistance, w in the composition formula (1) is preferably more than 0, more preferably 0.0005 or more, and even more preferably 0.001 or more. For obtaining a lithium secondary battery with higher discharge capacity at high current rate, w in the composition formula (1) is preferably 0.09 or less, more preferably 0.08 or less, and still more preferably 0.07 or less.

The upper limit values and lower limit values of w can be arbitrarily combined.

For example, w is preferably more than 0 and 0.09 or less, more preferably 0.0005 or more and 0.08 or less, and still more preferably 0.001 or more and 0.07 or less.

The value of y + z + w in the composition formula (1) is preferably less than 0.5, and more preferably 0.3 or less. The lower limit of y + z + w is not particularly limited as long as the effects of the present invention can be obtained, but is preferably 0.03 or more, and more preferably 0.05 or more.

The upper limit and the lower limit of y + z + w can be arbitrarily combined.

For example, the value of y + z + w is preferably 0.01 or more and less than 0.5, and more preferably 0.05 or more and 0.3 or less.

M in the composition formula (1) represents one or more metals selected from the group consisting of Fe, Cu, Ti, Mg, A1, W, B, Mo, Nb, Zn, Sn, Zr, Ga and V.

M in the composition formula (1) is preferably at least one metal selected from the group consisting of Ti, Mg, Al, W, B and Zr for obtaining a lithium secondary battery with higher cycle performance, and is preferably at least one metal selected from the group consisting of Ti, A1, W, B and Zr for obtaining a lithium secondary battery with higher thermal stability.

In the present embodiment, w, x, y, and z in the composition formula (1) described above can be determined by dissolving the powder of the lithium composite metal compound in hydrochloric acid and then analyzing the resulting with an inductively coupled plasma emission spectrometer (SPS3000, manufactured by SII Nano Technology Corporation).

- Requirement (A)

The lithium metal composite oxide powder of the present embodiment has a BET specific surface area of less than 2 $m^2/g$, preferably 1.8 $m^2/g$ or less, more preferably 1.6 $m^2/g$ or less, and particularly preferably 1.4 $m^2/g$ or less. As long as the effect of the present invention is obtained, the lower limit of the BET specific surface area is not particularly limited. However, for example, the BET specific surface area is preferably 0.05 $m^2/g$ or more, more preferably 0.08 $m^2/g$ or more, even more preferably 0.1 $m^2/g$ or more, and particularly preferably 0.12 $m^2/g$ or more.

The upper limit values and lower limit values of the BET specific surface area can be arbitrarily combined.

For example, the BET specific surface area is preferably 0.05 $m^2$ or more and less than 2 $m^2/g$, more preferably 0.08 $m^2$ or more and 1.8 $m^2/g$ or less, even more preferably 1.0 $m^2$ or more and 1.6 $m^2/g$ or less, and particularly preferably 0.12 $m^2/g$ or more and 1.4 $m^2/g$ or less.

The BET specific surface area can be measured by $N_2$ adsorption, as described in the examples section below.

- Requirement (B)

In the lithium metal composite oxide powder of the present embodiment, the average particle diameter of primary particles is 1 $\mu$m or more, preferably 1.1 $\mu$m or more, and more preferably 1.2 $\mu$m or more.

The upper limit of the primary particle diameter is not particularly limited. As an example, the average particle diameter of the primary particles may be 5.0 $\mu$m or less, 4.0 $\mu$m or less, or 3.0 $\mu$m or less.

The upper limit value and the lower limit value of the average particle diameter can be arbitrarily combined.

For example, the average particle diameter is preferably 1 $\mu$m or more and 5.0 $\mu$m or less, more preferably 1.1 $\mu$m or more and 4.0 $\mu$m or less, and even more preferably 1.2 $\mu$m or more and 3.0 $\mu$m or less.

- Average particle diameter of primary particles

First, the lithium metal composite oxide powder is placed on a conductive sheet attached onto a sample stage, and SEM observation is carried out by radiating an electron beam with an accelerated voltage of 20 kV using a scanning electron microscope (JSM-5510, manufactured by JEOL Ltd.). 50 primary particles are arbitrarily selected in an image (SEM photograph) obtained from the SEM observation, parallel lines were drawn from a certain direction so as to sandwich the projection image of each primary particle, and the distance between the parallel lines (Feret diameter) is measured as the particle diameter of the primary particle. The arithmetic average value of the obtained particle diameters is the average primary particle diameter of the lithium metal composite oxide powder.

The lithium metal composite oxide powder of the present embodiment, which satisfies the above requirements (A) and (B), has an excellent effect of having less grain boundaries and being less susceptible to particle breakage due to pressurization operations during molding of the positive electrode material. The lithium metal composite oxide powder of the present embodiment has another effect that it is easy to specifically regulate the ratio of an alkali metal content (% by mass) excluding lithium based on a total mass of the lithium metal composite oxide powder respect to a sulfate radical content (% by mass) based on a total mass of the lithium metal composite oxide powder, which is explained below in connection with the requirement (C).

- Requirement (C)

In the lithium metal composite oxide powder of the present embodiment, a ratio of an alkali metal content (% by mass) excluding lithium based on a total mass of the lithium metal composite oxide powder is 0.1 or more and less than 50, preferably 0.5 or more and 40 or less, and more preferably 0.7 or more and 30 or less, with respect to a sulfate radical content (% by mass) based on a total mass of the lithium metal composite oxide powder.

In the context of the present specification, the term "sulfate radical" means $SO_4^{2-}$ present in the lithium metal composite oxide powder after the calcination step.

The lithium metal oxide powder of the present embodiment includes, as a main component, the lithium metal oxide composite oxide represented by the formula (1) above. The lithium metal oxide powder of the present embodiment may include, in addition to the lithium metal oxide composite oxide represented by the formula (1) above, a small amount of impurities derived from substances used in the production process of the lithium metal composite oxide powder, such as raw materials and solvents.

Examples of the impurities include compounds that do not contain an alkali metal other than lithium but contain sulfate radicals; compounds that do not contain sulfate radicals but include an alkali metal other than lithium; compounds that contain an alkali metal other than lithium as well as sulfate radicals; lithium carbonate; lithium hydroxide; water, and the like. Examples of the alkali metal other than lithium include Na, K, Rb and Cs.

The amount of the compound represented by the formula (1) above, based on the total mass of the lithium metal oxide powder of the present embodiment, is preferably 97.00 to 99.99 % by mass, more preferably 98.00 to 99.98 % by mass, and even more preferably 98.50 to 99.97 % by mass.

The lithium metal composite oxide powder of the present embodiment satisfying the requirement (C) has a specifically regulated ratio of an alkali metal content excluding lithium respect to a sulfate radical content. The lithium metal composite oxide powder of the present embodiment satisfies the aforementioned requirements (A) and (B), and since the average particle diameter of the primary particles is not less than a specific value, it is easy to adjust the sulfate radical content by washing. On the other hand, when the average particle diameter of the primary particles is below the specific value, the secondary particles composed of the primary particles have many grain boundaries, and the sulfate radical content is difficult to control by washing so that the sulfate radicals tend to remain in a large quantity.

It is presumed that the lithium metal composite oxide powder of the present embodiment has less grain boundaries in the secondary particles, resulting in less amount of sulfate radicals on the particle surfaces.

Sulfate radicals are highly hygroscopic. The presence of larger amount of $SO_4^{2-}$ and less amount of counter ions (alkali metals) destabilizes $SO_4^{2-}$, which tends to increase hygroscopicity. Therefore, when a lithium metal composite oxide powder with a large amount of residual sulfate radicals is used as a positive electrode active material, the positive electrode active material absorbs moisture. This moisture reacts with the alkaline components in the positive electrode material, thereby increasing the pH, which denatures the binder component of the positive electrode material and causes the gelation of the binder component.

On the other hand, the presence of less amount of $SO_4^{2-}$ and excessive amount of counter ions (alkali metals) increases the ratio of alkali metals other than lithium present in the crystal structure of the lithium metal composite oxide powder at its sites which are originally supposed to be occupied by lithium ions, resulting in increase in the internal resistance of the battery.

The ratio of an alkali metal content (% by mass) excluding lithium to a sulfate radical content (% by mass) can be measured by the following method.

After dissolving the lithium metal composite oxide powder in hydrochloric acid, an inductively coupled plasma emission spectrometry (ICP) is performed to measure the amount of sulfur atoms and the amount of alkali metal atoms other than lithium. Then, the measured amount of sulfur atoms is converted to the amount of sulfate radicals, assuming that all of the sulfur atoms are derived from the sulfate radicals. From the measured amounts of alkali metal atoms other than lithium and sulfate radicals, the alkali metal content (% by mass) excluding lithium and the sulfate radical content (% by mass) in the lithium metal composite oxide powder is calculated, and the alkali metal content (% by mass) excluding lithium is divided by the sulfate radical content (% by mass) to calculate the ratio of the alkali metal content (% by mass) excluding lithium to the sulfate radical content (% by mass).

The sulfate radical content (% by mass), based on the total mass of the lithium metal composite oxide powder, is preferably 0.0001 to 3 % by mass, more preferably 0.0002 to 2 % by mass, and even more preferably 0.0001 to 1 % by mass.

For obtaining a lithium secondary battery with high cycle characteristics using the lithium metal composite oxide powder of the present embodiment, it is preferable that, with respect to 10 % cumulative diameter ($D_{10}$), 50 % cumulative diameter ($D_{50}$) and 90 % cumulative diameter ($D_{90}$) determined from particle size distribution measurement values, the 50 % cumulative diameter ($D_{50}$) is 2 $\mu$m or more and 15 $\mu$m or less, and a relationship of formula (D) is satisfied:

$$0.8 \leq (D_{90} - D_{10})/D_{50} \leq 3.5 \quad (D).$$

The 50 % cumulative diameter ($D_{50}$) described above is preferably 2.2 $\mu$m or more, more preferably 2.5 $\mu$m or more, and even more preferably 3.0 $\mu$m or more.

The 50 % cumulative diameter ($D_{50}$) is preferably 10 $\mu$m or less, more preferably 8.0 $\mu$m or less, and even more preferably 5.0 $\mu$m or less.

The upper limit and the lower limit of the 50 % cumulative diameter ($D_{50}$) can be arbitrarily combined. In the present embodiment, the 50 % cumulative diameter ($D_{50}$) is preferably 2.2 μm or more and 10 μm or less, more preferably 2.5 μm or more and 8.0 μm or less, and even more preferably 3.0 μm or more and 5.0 μm or less.

The value of ($D_{90}$ - $D_{10}$)/$D_{50}$ is preferably 1.0 or more, more preferably 1.5 or more, and even more preferably 2.0 or more.

The value of ($D_{90}$ - $D_{10}$)/$D_{50}$ is 3.4 or less, preferably 3.2 or less, and even more preferably 3.0 or less.

The upper limit and the lower limit of ($D_{90}$ - $D_{10}$)/$D_{50}$ can be arbitrarily combined. In the present embodiment, the value is preferably 1.0 or more and 3.4 or less, more preferably 1.5 or more and 3.2 or less, and particularly preferably 2.0 or more and 3.0 or less.

In the present embodiment, $D_{90}$, $D_{50}$, and $D_{10}$ can be determined by measuring the particle size distribution using a laser diffraction scattering particle size distribution analyzer as described in the examples section.

For improving the coatability during the production of an electrode using the lithium metal composite oxide powder of the present embodiment, the value obtained by dividing the moisture content of the powder (% by mass based on the total mass of the powder) by the BET specific surface area of the powder ($m^2/g$) is preferably 0.005 ((% by mass/g)/$m^2$) or more and 0.5 ((% by mass/g)/$m^2$) or less, more preferably 0.005 or more and 0.3 ((% by mass/g)/$m^2$) or less, even more preferably 0.008 ((% by mass/g)/$m^2$) or more and 0.2 ((% by mass/g)/$m^2$) or less, and particularly preferably 0.010 ((% by mass/g)/$m^2$) or more and 0.05 ((% by mass/g)/$m^2$) or less.

In the present embodiment, the moisture content of the lithium metal composite oxide powder can be measured using a coulometric Karl Fischer moisture meter, as described in the examples section.

In the lithium metal composite oxide powder of the present embodiment, it is preferable that a lithium carbonate content in residual alkali of the lithium metal composite oxide powder as measured by neutralization titration is 0.7 % by mass or less, based on a total mass of the lithium metal composite oxide powder, and a lithium hydroxide content in residual alkali of the lithium metal composite oxide powder as measured by neutralization titration is 0.7 % by mass or less, based on a total mass of the lithium metal composite oxide powder.

The lithium carbonate content is more preferably 0.69 % by mass or less, and even more preferably 0.68 % by mass or less. The lithium carbonate content is most preferably 0, but is usually 0.01 % by mass or more, preferably 0.02 % by mass or more, and more preferable lower limit is 0.03 % by mass.

The upper limit and the lower limit of the lithium carbonate content can be arbitrarily combined.

For example, the lithium carbonate content is preferably 0 % by mass or more and 0.7 % by mass or less, more preferably 0.01 % by mass or more and 0.69 % by mass or less, and even more preferably 0.03 % by mass or more and 0.68 % by mass or less.

The lithium hydroxide content is more preferably 0.5 % by mass or less, and even more preferably 0.2 % by mass or less. The lithium hydroxide content is most preferably 0, but is usually 0.01 % by mass or more, preferably 0.02 % by mass or more, and more preferable lower limit is 0.03 % by mass.

The upper limit and the lower limit of the lithium hydroxide content can be arbitrarily combined.

For example, the lithium hydroxide content is preferably 0 % by mass or more and 0.7 % by mass or less, more preferably 0.01 % by mass or more and 0.69 % by mass or less, and even more preferably 0.03 % by mass or more and 0.68 % by mass or less.

In the present embodiment, the amounts of lithium carbonate and lithium hydroxide contained in the lithium metal composite oxide powder can be measured by neutralization titration as described in the examples section.

For obtaining a lithium secondary battery with a high discharge capacity and a low internal resistance, the alkali metal content excluding lithium in the lithium metal composite oxide powder of the present embodiment is preferably 0.001 % by mass or more and 0.05 % by mass or less, more preferably 0.0012 % by mass or more and 0.03 % by mass or less, even more preferably 0.0014 % by mass or more and 0.01 % by mass or less, and particularly preferably 0.0016 % by mass or more and 0.005 % by mass or less.

(Layered Structure)

In the present embodiment, the crystal structure of the positive electrode active material is a layered structure, and more preferably a hexagonal crystal structure or a monoclinic crystal structure.

The hexagonal crystal structure belongs to any one of the space groups selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, P6322, P6mm, P6cc, $P6_3$cm, P63mc, P-6m2, P-6c2, P-62m, P-62c, P6/mmm, P6/mcc, $P6_3$/mcm, and $P6_3$/mmc.

The monoclinic crystal structure belongs to any one of the space groups selected from the group consisting of P2, $P2_1$, C2, Pm, Pc, Cm, Cc, P2/m, $P2_1$/m, C2/m, P2/c, $P2_1$/c, and C2/c.

Among the aforementioned crystal structures, from the viewpoint of obtaining a lithium secondary battery having high discharge capacity, the particularly preferable crystal structure is a hexagonal crystal structure belonging to R-3m or a monoclinic crystal structure belonging to C2/m.

<Method for Producing Lithium Metal Composite Oxide Powder]

For producing the lithium metal composite oxide powder of the present embodiment, it is preferable that a metal composite compound is first prepared, which includes Ni as an essential metal other than lithium, Co, Mn, and at least one optional metal selected from Fe, Cu, Ti, Mg, Al, W, B, Mo, Nb, Zn, Sn, Zr, Ga, La and V, and then the metal composite compound is calcined together with a suitable lithium salt and an inert melting agent. As the metal composite compound, it is preferable to use a metal composite hydroxide or a metal composite oxide. Hereinbelow, as to one example of the method for producing the lithium metal composite oxide powder, explanations are made separately on the step of producing the metal composite compound and the step of producing the lithium metal composite oxide.

(Step of Producing Metal Composite Compound)

The metal composite compound can be produced by the conventionally known batch co-precipitation method or continuous co-precipitation method.

Hereinbelow, the method for producing the metal composite compound is explained taking as an example the case of production of a metal composite hydroxide containing nickel, cobalt and manganese as metals.

A nickel salt solution, a cobalt salt solution, a manganese salt solution and a complexing agent are reacted by the continuous method described in Japanese Patent Unexamined Publication No. 2002-201028 to produce a metal composite hydroxide represented by $Ni_{(1-y-z-w)}Co_yMn_z(OH)_2$ (wherein $0 \leq y \leq 0.4$, $0 \leq z \leq 0.4$, $0 \leq w \leq 0.1$) by the co-precipitation method.

There is no particular limitation with respect to a nickel salt as a solute in the aforementioned nickel salt solution. For example, at least one of nickel sulfate, nickel nitrate, nickel chloride and nickel acetate can be used. As a cobalt salt as a solute in the cobalt salt solution, for example, at least one of cobalt sulfate, cobalt nitrate, cobalt chloride and cobalt acetate can be used. As a manganese salt as a solute in the manganese salt solution, for example, at least one of manganese sulfate, manganese nitrate, manganese chloride and manganese acetate can be used. These metal salts are used in a ratio corresponding to the composition ratio of the aforementioned $Ni_{(1-y-z-w)}Co_yMn_z(OH)_2$. That is, the amount of each metal salt is set such that the molar ratio of nickel, cobalt, and manganese in the mixed solution containing the above metal salts matches $(1-y-z-w) : y : z$ in the composition formula (I) for the lithium metal composite oxide. As a solvent, water can be used.

The complexing agent is a substance capable of forming a complex with ions of nickel, cobalt and manganese in an aqueous solution, the examples of which include an ammonium ion donor (ammonium sulfate, ammonium chloride, ammonium carbonate, ammonium fluoride, etc.), hydrazine, ethylenediaminetetraacetic acid, nitrilotriacetic acid, uracil diacetate and glycine. The amount of the complexing agent contained in a mixture containing the nickel salt solution, the cobalt salt solution, the manganese salt solution, and the complexing agent is preferably, for example, more than 0 and 2.0 or less, in terms of a molar ratio thereof relative to the total number of moles of the metal salts.

For adjusting the pH value of the aqueous solution during the precipitation, if necessary, an alkali metal hydroxide (such as sodium hydroxide or potassium hydroxide) may be added.

Successive addition of the aforementioned nickel salt solution, cobalt salt solution and manganese salt solution as well as the complexing agent to a reaction vessel allows nickel, cobalt and manganese to react with each other, resulting in the generation of $Ni_{(1-y-z-w)}Co_yMn_z(OH)_2$. The reaction is performed with the temperature in the reaction vessel being regulated, for example, within the range of 20 °C to 80 °C, preferably 30 °C to 70 °C, and the pH value at 40 °C in the reaction vessel being regulated, for example, within the range of 9 to 13, preferably 11 to 13, while appropriately agitating the content of the reaction vessel. The reaction vessel is one which allows the overflow for separation of the precipitated reaction product.

With respect to various properties of the lithium metal composite oxide to be finally obtained as a result of carrying out the process as described below, i.e., secondary particle diameter, and pore radius, such properties can be controlled by appropriately regulating the concentrations of the metal salts to be supplied to the reaction vessel, agitation speed, reaction temperature, reaction pH, and calcination conditions described below, and the like. Various gases such as inert gases (e.g., nitrogen, argon and carbon dioxide), oxidizing gases (e.g., air and oxygen) or a mixture thereof may be added to the reaction vessel as well in addition to the regulation of the aforementioned conditions. As a substance for promoting the oxidation state other than gases, peroxides such as hydrogen peroxide, peroxide salts such as permanganate, perchlorate, hypochlorite, nitric acid, halogen, ozone, etc. can be used. As a substance for promoting the reduction state other than gases, organic acids such as oxalic acid and formic acid, sulfites, hydrazine, etc. can be used.

For example, a higher reaction pH in the reaction vessel tends to result in generation of a metal composite compound with smaller secondary particle diameter. On the other hand, a lower reaction pH tends to result in generation of a metal composite compound with larger secondary particle diameter. Further, a higher oxidation state in the reaction vessel tends to result in generation of a metal composite compound having a large number of voids. On the other hand, a lower oxidation state tends to result in generation of a dense metal composite compound. The reaction conditions can be optimized while monitoring the various physical properties of the final lithium composite oxide to be obtained since the optimal reaction conditions may vary depending on the size of the reaction vessel used, etc.

After the reaction as described above, the resulting precipitate of the reaction product is washed with water and, then, dried, followed by isolation of a nickel-cobalt-manganese composite hydroxide as the nickel-cobalt-manganese composite compound. If necessary, the obtained precipitate of the reaction product may be rinsed with weak acid water or an alkaline solution containing sodium hydroxide or potassium hydroxide.

In the above example, a nickel-cobalt-manganese composite hydroxide is produced; however, a nickel-cobalt-manganese composite oxide may be produced instead. The nickel-cobalt-manganese composite oxide can be prepared by, for example, performing a step of bringing the coprecipitate slurry as described above into contact with an oxidizing agent or a step of heat-treating the nickel-cobalt-manganese composite hydroxide.

(Step for Producing Lithium Metal Composite Oxide)

After drying the metal composite compound (metal composite oxide or metal composite hydroxide), the dried product is mixed with a lithium salt to obtain a mixture. In the present embodiment, it is preferable that an inert melting agent is also mixed with the dried product and the lithium salt.

By calcining the resulting inert melting agent-containing mixture containing the metal composite oxide or the metal composite hydroxide, the lithium salt and the inert melting agent, the mixture is allowed to be calcined in the presence of the inert melting agent. The calcination of the mixture in the presence of the inert melting agent enables suppression of the formation of secondary particles as sintered products of the primary particles. Further, primary particles having a high degree of crystallinity can be obtained.

The drying conditions are not particularly limited, and may be, for example, any of the following conditions: conditions which do not allow the metal composite oxide or the metal composite hydroxide to be oxidized or reduced (i.e., conditions where an oxide remains to be an oxide, and a hydroxide remains to be a hydroxide), conditions which allow the metal composite hydroxide to be oxidized (i.e., conditions where a hydroxide is oxidized into an oxide), and conditions which allow the metal composite oxide to be reduced (i.e., conditions where an oxide is reduced into a hydroxide). For providing conditions which do not cause oxidation nor reduction, an inert gas such as nitrogen or an inert gas (e.g., helium and argon) may be used. For providing conditions which oxidize the metal composite hydroxide, oxygen or air may be used. Further, for providing conditions which reduce the metal composite oxide, a reducing agent such as hydrazine or sodium sulfite may be used in an inert gas atmosphere. As the lithium salt, any of lithium carbonate, lithium nitrate, lithium acetate, lithium hydroxide, lithium hydroxide hydrate and lithium oxide may be used individually or in the form of a mixture of two or more of these lithium salts.

After drying the metal composite oxide or the metal composite hydroxide, the resulting may be subjected to appropriate classification. The aforementioned lithium salt and the metal composite hydroxide are used in respective amounts determined in view of the composition ratio of the end product. For example, when using a nickel-cobalt-manganese composite hydroxide, the lithium salt and the metal composite hydroxide are used in a ratio corresponding to the composition ratio of $LiNi_{(1-y-z-w)}Co_yMn_zO_2$, wherein $0 \leq y \leq 0.4$, $0 \leq z \leq 0.4$, and $0 \leq w \leq 0.1$. By calcining a mixture of the nickel-cobalt-manganese composite hydroxide and the lithium salt, a lithium-nickel-cobalt-manganese composite oxide can be obtained. The calcination may be carried out in dried air, an oxygen atmosphere, an inert atmosphere or the like depending on the desired composition, and may include a plurality of heating steps if necessary.

In the present embodiment, the calcination of the mixture in the presence of an inert melting agent can facilitate the crystallization reaction of the mixture. The inert melting agent may remain in the lithium metal composite oxide powder after calcination, or may be removed by washing with water or the like after calcination. In the present embodiment, for satisfying the requirement (C), it is preferable to wash the lithium composite metal oxide after calcination with water or the like, and it is preferable to adjust the amount of water used for washing. Another preferable method is to wash the lithium composite metal oxide with a washing solution prepared by causing the water for washing to contain sulfate radicals or an alkali metal other than lithium in advance.

By adjusting the holding temperature for the calcination, the particle diameters of the primary particles and the secondary particles in the obtained lithium metal composite oxide can be controlled to fall within the respective preferred ranges of the present embodiment.

Normally, as the holding temperature increases, the particle diameters of the primary and secondary particles tend to increase, resulting in smaller BET specific surface area. The holding temperature in the calcination may be adjusted appropriately in view of the type of transition metal element to be used and the types and amounts of precipitant and inert melting agent.

In the present embodiment, the setting of the holding temperature can be done in consideration of the melting point of the inert melting agent described below, and the holding temperature is preferably set within a range of $\pm 200°C$ from the melting point of the inert melting agent.

Specifically, the holding temperature may be within a range of 200 °C to 1150 °C, and is preferably within a range of 300 °C to 1050 °C, and more preferably 500 °C to 1000 °C.

The time for keeping the aforementioned holding temperature may be 0.1 hour or more and 20 hours or less, and is preferably 0.5 hour or more to 10 hours or less. The rate of heating up to the holding temperature is usually between 50 °C/hour and 400 °C/hour, and the rate of cooling down from the holding temperature to room temperature is usually between 10 °C/hour and 400 °C/hour. Air, oxygen, nitrogen, argon or a mixture of these gases can be used as the atmosphere for the calcination.

By appropriately setting the holding temperature, the time for keeping the holding temperature and the atmosphere of calcination, it is possible to adjust the parameters of the requirements (A) and (B) as well as the lithium carbonate content and the lithium hydroxide content in the residual alkali of the lithium metal composite oxide powder to fall within respective preferable ranges.

The lithium metal composite oxide after the calcination is pulverized and then appropriately classified, thereby obtaining a positive electrode active material applicable to a lithium secondary battery.

In the present embodiment, the lithium metal composite oxide powder after the calcination is mixed with pure water to prepare a slurry, followed by stirring, to thereby perform washing. The mass ratio of the powder in the slurry is less than 0.5, preferably 0.45 or less, and more preferably 0.40, relative to the total mass of the powder and the pure water (i.e., the mass of the slurry). When the mass ratio is less than (or not more than) the upper limit described above, it is possible to adjust the parameter of the requirement (B) as well as the lithium carbonate content and the lithium hydroxide content in the residual alkali of the lithium metal composite oxide powder to fall within respective preferable ranges.

After the above-mentioned washing, it is desirable to perform dehydration, isolation, drying or the like as appropriate.

The inert melting agent that can be used in the present embodiment is not limited to those that are not likely to react with the mixture during the calcination. In the present embodiment, the inert melting agent may be at least one selected from the group consisting of fluoride, chloride, carbonate, sulfate, nitrate, phosphate, hydroxide, molybdate, and tungstate of at least one element (hereinafter referred to as "A") selected from the group consisting of Na, K, Rb and Cs.

Examples of the fluoride of A include NaF (melting point: 993 °C), KF (melting point: 858 °C), RbF (melting point: 795 °C) and CsF (melting point: 682 °C).

Examples of the chloride of A include NaCl (melting point: 801 °C), KCl (melting point: 770 °C), RbCl (melting point: 718 °C) and CsCl (melting point: 645 °C).

Examples of the carbonate of A include $Na_2CO_3$ (melting point: 854 °C), $K_2CO_3$ (melting point: 899 °C), $Rb_2CO_3$ (melting point: 837 °C) and $Cs_2CO_3$ (melting point: 793°C).

Examples of the sulfate of A include $Na_2SO_4$ (melting point: 884 °C), $K_2SO_4$ (melting point: 1069 °C), $Rb_2SO_4$ (melting point: 1066 °C) and $Cs_2SO_4$ (melting point: 1005 °C).

Examples of the nitrate of A include $NaNO_3$ (melting point: 310 °C), $KNO_3$ (melting point: 337 °C), $RbNO_3$ (melting point: 316 °C) and $CsNO_3$ (melting point: 417 °C).

Examples of the phosphate of A include $Na_3PO_4$, $K_3PO_4$ (melting point: 1340 °C), $Rb_3PO_4$ and $Cs_3PO_4$.

Examples of the hydroxide of A include NaOH (melting point: 318 °C), KOH (melting point: 360 °C), RbOH (melting point: 301 °C) and CsOH (melting point: 272 °C).

Examples of the molybdate of A include $Na_2MoO_4$ (melting point: 698 °C), $K_2MoO_4$ (melting point: 919 °C), $Rb_2MoO_4$ (melting point: 958 °C) and $Cs_2MoO_4$ (melting point: 956 °C).

Examples of the tungstate of A include $Na_2WO_4$ (melting point: 687 °C), $K_2WO_4$ (melting point: 933 °C), $Rb_2WO_4$ and $Cs_2WO_4$.

In the present embodiment, two or more of these inert melting agents may be used. When two or more inert melting agents are used, the melting point may be lowered. Further, among these inert melting agents, for obtaining a lithium metal composite oxide powder having higher crystallinity, it is preferable to use one or both of the carbonate of A and the chloride of A. Further, A is preferably one or both of sodium (Na) and potassium (K). That is, among the above, the inert melting agent is particularly preferably one or more selected from the group consisting of NaCl, KCl, $Na_2CO_3$, $K_2CO_3$, $Na_2SO_4$, and $K_2SO_4$.

The use of these inert melting agents enables adjustment of the parameters of the requirements (A) and (B) for the resulting lithium metal composite oxide so as to fall within respective preferred ranges of the present embodiment.

In the present embodiment, when either one or both of $K_2SO_4$ and $Na_2SO_4$ is used as the inert melting agent, the average particle diameters of the primary and secondary particles of the resulting lithium metal composite oxide can be controlled to fall within respective preferred ranges.

In the present embodiment, the amount of the inert melting agent used during the calcination may be appropriately set. For allowing the resulting lithium metal composite oxide to satisfy the requirement (B), the amount of the inert melting agent to be used is preferably 0.1 part by mass or more, and more preferably 1 part by mass or more, relative to 100 parts by mass of the lithium salt. Further, the molar ratio of the inert melting agent to the total molar amount of the inert melting agent and the lithium salt [inert melting agent/(inert melting agent + lithium salt)] is preferably 0.01 to 1.0, more preferably 0.015 to 0.3, and even more preferably 0.02 to 0.2. Further, if necessary, an inert melting agent other than mentioned above may be used as well. Examples of such other melting agents include ammonium salts such as $NH_4Cl$ and $NH_4F$.

<Positive Electrode Active Material for Lithium Secondary Battery>

The present embodiment relates to a positive electrode active material for a lithium secondary battery, including the lithium metal composite oxide powder of the embodiment described above.

<Lithium Secondary Battery>

Next, explanations are made on a positive electrode using the positive electrode active material (for a lithium secondary battery) produced by the method of the present embodiment, and a lithium secondary battery including this positive electrode, while describing the configuration of a lithium secondary battery.

In one example of the lithium secondary battery of the present embodiment, the lithium secondary battery includes a positive electrode, a negative electrode, a separator interposed between the positive electrode and the negative electrode, and an electrolytic solution disposed between the positive electrode and the negative electrode.

Each of FIG. 1A and FIG. 1B is a schematic view illustrating an example of the lithium secondary battery of the present embodiment. A cylindrical lithium secondary battery 10 of the present embodiment is manufactured as described below.

First, as illustrated in FIG. 1A, a pair of separators 1 having a strip shape, a strip-shaped positive electrode 2 having a positive electrode lead 21 at one end, and a strip-shaped negative electrode 3 having a negative electrode lead 31 at one end are laminated in an order of the separator 1, the positive electrode 2, the separator 1, and the negative electrode 3, and are wound into an electrode group 4.

Next, as illustrated in FIG. 1B, the electrode group 4 and an insulator (not shown) are placed in a battery can 5, followed by sealing the bottom of the can, and then an electrolytic solution 6 is impregnated into the electrode group 4 such that an electrolyte is disposed between the positive electrode 2 and the negative electrode 3. Further, the top section of the battery can 5 is sealed using a top insulator 7 and a sealing body 8, whereby the lithium secondary battery 10 can be obtained.

The shape of the electrode group 4 may be, for example, of a columnar shape with its cross-section being round, oval, rectangular, or of a round-cornered rectangular shape, wherein the cross-section is perpendicular to the axis of winding of the electrode group 4.

As the shape of the lithium secondary battery including the aforementioned electrode group 4, it is possible to employ the shapes prescribed by IEC60086, which is the standard of batteries prescribed by the International Electrotechnical Commission (IEC), or JIS C 8500. Examples thereof include a cylindrical shape, an angular shape, etc.

The lithium secondary battery is not limited to the wound construction as described above, and may have a laminated construction obtained by laminating a positive electrode, a separator, a negative electrode, a separator, and so forth. Examples of the laminated lithium secondary battery include the so-called coin-type battery, button-type battery, and paper-type (or sheet-type) battery.

Hereinbelow, the respective components will be described.

(Positive Electrode)

The positive electrode of the present embodiment can be manufactured by, first, preparing a positive electrode mix including the aforementioned positive electrode active material, a conductive material and a binder, and causing the positive electrode mix to be supported on a positive electrode current collector.

(Conductive Material)

As the conductive material included in the positive electrode active material of the present embodiment, a carbonaceous material can be used. Examples of the carbonaceous material include a graphite powder, a carbon black (such as acetylene black) and a fibrous carbonaceous material. Since carbon black is in the form of microparticles and has a large surface area, the addition of only a small amount of the carbon black to the positive electrode mix increases the conductivity within the positive electrode, and improves the charge/discharge efficiency and the output performance as well; however, too large an amount of carbon black deteriorates the binding strength of the binder exerted not only between the positive electrode mix and the positive electrode current collector but also within the positive electrode mix, thereby becoming an adverse factor that increases an internal resistance.

The amount of the conductive material in the positive electrode mix is preferably 5 parts by mass or more and 20 parts by mass or less, relative to 100 parts by mass of the positive electrode active material. This amount may be decreased when using a fibrous carbonaceous material such as a graphitized carbon fiber or a carbon nanotube as the conductive material.

(Binder)

As the binder included in the positive electrode active material of the present embodiment, a thermoplastic resin can be used.

Examples of the thermoplastic resin include fluororesins such as polyvinylidene fluoride (hereinafter also referred to as PVdF), polytetrafluoroethylene (hereinafter also referred to as PTFE), ethylene tetrafluoride-propylene hexafluoride-vinylidene fluoride type copolymers, propylene hexafluoride-vinylidene fluoride type copolymers, and ethylene tetrafluoride-perfluorovinyl ether type copolymers; and polyolefin resins such as polyethylene and polypropylene.

Two or more of these thermoplastic resins may be used in the form of a mixture thereof. When a fluororesin and a polyolefin resin are used as the binder, it is possible to obtain a positive electrode mix capable of strong adhesive force relative to the positive electrode current collector as well as strong biding force within the positive electrode mix in itself by adjusting the ratio of the fluororesin to fall within the range of from 1 % by mass to 10 % by mass, and the ratio of the polyolefin resin to fall within the range of from 0.1 % by mass to 2 % by mass, based on the total mass of the positive electrode mix.

(Positive Electrode Current Collector)

As the positive electrode current collector included in the positive electrode of the present embodiment, it is possible to use a strip-shaped member composed of a metal material such as Al, Ni, or stainless steel as a component material. It is especially preferred to use a current collector which is made of Al and is shaped into a thin film because of its high processability and low cost.

Examples of the method for causing the positive electrode mix to be supported on the positive electrode current collector include a method in which the positive electrode mix is press-formed on the positive electrode current collector. Alternatively, the positive electrode mix may be caused to be supported on the positive electrode current collector by a method including producing a paste from the positive electrode mix using an organic solvent, applying the obtained paste of the positive electrode mix to at least one surface of the positive electrode current collector, drying the paste, and press-bonding the resultant to the current collector.

Examples of the organic solvent that can be used for producing the paste from the positive electrode mix include amine-based solvents such as N,N-dimethylaminopropylamine and diethylene triamine; ether-based solvents such as tetrahydrofuran; ketone-based solvents such as methyl ethyl ketone; ester-based solvents such as methyl acetate; and amide-based solvents such as dimethyl acetamide, and N-methyl-2-pyrrolidone (hereinafter, sometimes also referred to as "NMP").

Examples of the method for applying the paste of the positive electrode mix to the positive electrode current collector include a slit die coating method, a screen coating method, a curtain coating method, a knife coating method, a gravure coating method, and an electrostatic spray method.

The positive electrode can be produced by the method as described above.

(Negative Electrode)

The negative electrode included in the lithium secondary battery of the present embodiment is not particularly limited as long as it is capable of doping and de-doping lithium ions at a potential lower than the positive electrode, and examples thereof include an electrode comprising a negative electrode current collector having supported thereon a negative electrode mix including a negative electrode active material, and an electrode constituted solely of a negative electrode active material.

(Negative Electrode Active Material)

Examples of the negative electrode active material included in the negative electrode include materials which are carbonaceous materials, chalcogen compounds (oxides, sulfides, etc.), nitrides, metals or alloys, and allow lithium ions to be doped or de-doped at a potential lower than the positive electrode.

Examples of the carbonaceous materials that can be used as the negative electrode active material include graphite such as natural graphite and artificial graphite, cokes, carbon black, pyrolytic carbons, carbon fibers, and organic macromolecular compound-sintered bodies.

Examples of oxides that can be used as the negative electrode active material include oxides of silicon repre-

sented by the formula: $SiO_x$ (wherein x is an positive integer) such as $SiO_2$ and $SiO$; oxides of titanium represented by the formula: $TiO_x$ (wherein x is an positive integer) such as $TiO_2$ and $TiO$; oxides of vanadium represented by the formula: $VO_x$ (wherein x is an positive integer) such as $V_2O_5$ and $VO_2$; oxides of iron represented by the formula: $FeO_x$ (wherein x is an positive integer) such as $Fe3O_4$, $Fe_2O_3$ and $FeO$; oxides of tin represented by the formula: $SnO_x$ (wherein x is an positive integer) such as $SnO_2$ and $SnO$; oxides of tungsten represented by the formula: $WO_x$ (wherein x is an positive integer) such as $WO3$ and $WO_2$; and metal composite oxides containing lithium and titanium or vanadium such as $Li_4Ti5O_{12}$ and $LiVO_2$.

Examples of sulfides that can be used as the negative electrode active material include sulfides of titanium represented by the formula: $TiS_x$ (wherein x is an positive integer) such as $Ti2S3$, $TiS2$ and $TiS$; sulfides of vanadium represented by the formula: $VS_x$ (wherein x is an positive integer) such as $V_3S_4$, $VS_2$, and $VS$; sulfides of iron represented by the formula: $FeS_x$ (wherein x is an positive integer) such as $Fe_3S_4$, $FeS_2$ and $FeS$; sulfides of molebdenum represented by the formula: $MoS_x$ (wherein x is an positive integer) such as $MO_2S_3$ and $MoS_2$; sulfides of tin represented by the formula: $SnS_x$ (wherein x is an positive integer) such as $SnS2$ and $SnS$; sulfides of tungsten represented by the formula: $WS_x$ (wherein x is an positive integer) such as $WS_2$; sulfides of antimony represented by the formula: $SbS_x$ (wherein x is an positive integer) such as $Sb_2S_3$; and sulfides of selenium represented by the formula: $SeS_x$ (wherein x is an positive integer) such as $Se_5S_3$, $SeS_2$ and $SeS$.

Examples of nitrides that can be used as the negative electrode active material include lithium-containing nitrides such as $Li3N$ and $Li_{3-x}A_xN$ (wherein A is one or both of Ni and Co, and $0 < x < 3$).

Each of the aforementioned carbonaceous materials, oxides, sulfides and nitrides may be used alone or in combination. Further, each of the aforementioned carbonaceous materials, oxides, sulfides and nitrides may be crystalline or amorphous.

Examples of metals that can be used as the negative electrode active material include lithium metals, silicon metals, tin metals, etc.

Examples of alloys that can be used as the negative electrode active material include lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$.

The metals or alloys are processed into, for example, a foil, and are in many cases used alone as an electrode.

Among the aforementioned negative electrode active materials, carbonaceous materials composed mainly of graphite such as natural graphite or artificial graphite are preferably used for reasons such as follows: the potential of the negative electrode hardly changes during charging from an uncharged state to a fully charged state (the potential flatness is favorable), the average discharge potential is low, the capacity retention after repeated charge/discharge cycles is high (the cycle performance is favorable), etc. Examples of the shape of the carbonaceous material include a flake shape as in the case of natural graphite, a spherical shape as in the case of mesocarbon microbeads, a fibrous shape as in the case of a graphitized carbon fiber, an agglomerate of fine powder, etc., and the carbonaceous material may have any of these shapes.

The negative electrode mix may include a binder as necessary. As the binder, a thermoplastic resin can be used, and examples thereof include PVdF, thermoplastic polyimides, carboxymethyl cellulose, polyethylene, and polypropylene.

(Negative Electrode Current Collector)

Examples of the negative electrode current collector included in the negative electrode include a strip-shaped member composed of a metal material such as Cu, Ni or stainless steel as a component material. Among these, it is preferred to use a current collector which is made of Cu and is shaped into a thin film, since Cu is unlikely to form an alloy with lithium and can be easily processed.

Examples of the method for causing the negative electrode mix to be supported on the above-described negative electrode current collector include, as in the case of the positive electrode, a press forming method, and a method in which a paste of the negative electrode mix obtained by using a solvent etc., is applied to and dried on the negative electrode current collector, and the resulting is press-bonded to the current collector.

(Separator)

As the separator used in the lithium secondary battery of the present embodiment, for example, it is possible to use one that is formed of a material such as a polyolefin resin (e.g., polyethylene or polypropylene), a fluororesin or a nitrogen-containing aromatic polymer, and has a form of a porous film, a nonwoven fabric, a woven fabric or the like. The separator may be composed of two or more of the materials mentioned above, or may be formed by laminating these materials.

In the present embodiment, for satisfactory permeation of the electrolyte through the separator during the use (charge and discharge) of the battery, the separator preferably has an air resistance of 50 sec/100 cc or more and 300 sec/100 cc or less, more preferably 50 sec/100 cc or more and 200 sec/100 cc or less, as measured by the Gurley method prescribed in JIS P 8117: 2009.

The porosity of the separator is preferably 30 % by volume or more and 80 % by volume or less, and more preferably 40 % by volume or more and 70 % by volume or less. The separator may be a laminate of separators having different porosities.

(Electrolytic Solution)

The electrolytic solution used in the lithium secondary battery of the present embodiment contains an electrolyte and an organic solvent.

Examples of the electrolyte contained in the electrolytic solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB(wherein "BOB" means bis(oxalato)borate), LiFSI(wherein "FSI" means bis(fluorosulfonyl)imide), a lithium salt of a lower aliphatic carboxylic acid, and $LiAlCl_4$. Two or more of these salts may be used in the form of a mixture thereof. Among these electrolytes, it is preferred to use at least one fluorine-containing salt selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$.

As the organic solvent included in the electrolyte, it is possible to use, for example, a carbonate such as propylene carbonate, ethylene carbonate, dimethyl carbonate, diethyl carbonate, ethyl methyl carbonate, 4-trifluoromethyl-1,3-dioxolane-2-one, and 1,2-di(methoxycarbonyloxy)ethane; an ether such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyl tetrahydrofuran; an ester such as methyl formate, methyl acetate, and y-butyrolactone; a nitrile such as acetonitrile and butyronitrile; an amide such as N,N-dimethyl formamide and N,N-dimethylacetoamide; a carbamate such as 3-methyl-2-oxazolidone; a sulfur-containing compound such as sulfolane, dimethyl sulfoxide, and 1,3-propane sultone; or a solvent produced by further introducing a fluoro group into the above-described organic solvent (a solvent in which one or more hydrogen atoms included in the organic solvent is substituted by a fluorine atom).

As the organic solvent, it is preferable to use a mixture of two or more of these organic solvents. Among the aforementioned organic solvents, a solvent mixture including a carbonate is preferable, and a solvent mixture of a cyclic carbonate and a non-cyclic carbonate and a solvent mixture of a cyclic carbonate and an ether are more preferable. As the solvent mixture of a cyclic carbonate and a non-cyclic carbonate, a solvent mixture including ethylene carbonate, dimethyl carbonate, and ethyl methyl carbonate is preferable. An electrolytic solution using the aforementioned solvent mixture has many advantages such as a wider operational temperature range, a low tendency of deterioration even after charge/discharge at a high current rate, a low tendency of deterioration even when used for a long period of time, and a low decomposability even when a graphite material such as natural graphite or artificial graphite is used as the active material for the negative electrode.

For improving the stability of the obtained lithium secondary battery, it is preferable to use an electrolytic solution including a lithium salt containing fluorine such as $LiPF_6$ and an organic solvent having a fluorine substituent. A solvent mixture including an ether having a fluorine substituent such as pentafluoropropyl methyl ether or 2,2,3,3-tetrafluoropropyl difluoromethyl ether and dimethyl carbonate is more preferable since a high capacity retention is achievable even when the battery is charged and discharged at a high current rate.

A solid electrolyte may be used instead of the aforementioned electrolytic solution. As the solid electrolyte, it is possible to use, for example, an organic polymer electrolyte such as a polyethylene oxide-type polymeric compound or a polymeric compound including at least one type of polymer chain selected from a polyorganosiloxane chain or a polyoxyalkylene chain. It is also possible to use the so-called gel-type electrolyte including a polymer retaining therein a non-aqueous electrolytic solution. Further, it is also possible to use an inorganic solid electrolyte including a sulfide such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$. In some cases, the use of such a solid electrolyte may further improve the safety of the lithium secondary battery.

In the lithium secondary battery of the present embodiment, the solid electrolyte, when used, may serve as a separator. In such a case, the separator may be omitted.

The positive electrode active material having configuration as described above contains the lithium metal composite oxide of the present embodiment described above, whereby side reactions occurring within a lithium secondary battery using the positive electrode active material can be suppressed.

The positive electrode having a configuration as described above uses the positive electrode active material of the present embodiment as described above, whereby side reactions occurring in a lithium secondary battery can be suppressed.

Furthermore, the lithium secondary battery having a configuration as described above has the aforementioned positive electrode, and hence is capable of suppressing side reactions occurring within the battery as compared to the conventional lithium secondary batteries.

EXAMPLES

Hereinbelow, the present invention will be described in more detail with reference to the Examples.

In the following Examples, the evaluations of the lithium metal composite oxide powder were carried out by the following method.

<Composition analysis>

The composition analysis of the lithium metal composite oxide manufactured by the method described below was carried out using an inductively coupled plasma emission spectrometer (SPS3000, manufactured by SII Nano Technology Inc.) after the lithium metal composite oxide powder was dissolved in hydrochloric acid.

<Measurement of BET Specific Surface Area>

1g of the lithium metal composite oxide powder was dried at 105 °C for 30 min in a nitrogen atmosphere and the BET specific surface area was measured using an $N_2$ adsorption assay device (Macsorb (registered trademark) manufactured by Mountech Co., Ltd. ) (unit: $m^2/g$).

<Measurement of Average Primary Particle Diameter>

The lithium metal composite oxide powder was placed on a conductive sheet attached onto a sample stage, and SEM observation was carried out by radiating an electron beam with an accelerated voltage of 20 kV using a scanning electron microscope (JSM-5510, manufactured by JEOL Ltd.). 50 primary particles were arbitrarily selected in an image (SEM photograph) obtained from the SEM observation, parallel lines were drawn from a certain direction so as to sandwich the projection image of each primary particle, and the distance between the parallel lines (Feret diameter) was measured as the particle diameter of the primary particle. The arithmetic average value of the obtained particle diameters was taken as the average primary particle diameter of the lithium metal composite oxide powder.

<Measurement of Ratio of Alkali Metal Content (% by mass) excluding Lithium to Sulfate Radical Content (% by mass)>

The ratio of an alkali metal content (% by mass) excluding lithium to a sulfate radical content (% by mass) was measured by the following method.

After dissolving the lithium metal composite oxide powder in hydrochloric acid, an inductively coupled plasma emission spectrometry (ICP) was performed to measure the amount of sulfur atoms and the amount of alkali metal atoms other than lithium. Then, the measured amount of sulfur atoms was converted to the amount of sulfate radicals, assuming that all of the sulfur atoms were derived from the sulfate radicals. From the measured amounts of alkali metal atoms other than lithium and sulfate radicals, the alkali metal content (% by mass) excluding lithium and the sulfate radical content (% by mass) in the lithium metal composite oxide powder was calculated, and the alkali metal content (% by mass) excluding lithium was divided by the sulfate radical content (% by mass) to calculate the ratio of the alkali metal content (% by mass) excluding lithium to the sulfate radical content (% by mass).

<Determination of Residual Lithium Content of Lithium Metal Composite Oxide Powder (neutralization titration)>

20g of the lithium metal composite oxide powder and 100g of pure water were placed in 500-mL beaker, and stirred for 5 minutes. Then, the lithium metal composite oxide was filtered. To 60g of the remaining filtrate was dropwise added hydrochloric acid in an amount of 0.1 mol /L, and the pH of the filtrate at 40°C was measured by a pH meter. By the equation described below, the residual lithium carbonate content and the residual lithium hydroxide content of the lithium metal composite oxide were calculated with the titration amount of hydrochloric acid at pH = $8.3 \pm 0.1$ as A ml and the titration amount of hydrochloric acid at pH = $4.5 \pm 0.1$ as B ml. In the equation below, the molecular weights of lithium carbonate and lithium hydroxide were calculated supposing the following atomic weights for the respective atoms: H = 1.000, Li = 6.941, C= 12, O= 16.

$$\text{Lithium carbonate concentration (\%)} = 0.1 \times (B - A)/1000 \times 73.882/(20 \times 60/100) \times 100$$

$$\text{Lithium hydroxide concentration (\%)} = 0.1 \times (2A - B)/1{,}000 \times 23.941/(20 \times 60/100) \times 100$$

<Particle Size Distribution Measurement of Lithium Metal Composite Oxide Powder>

0.1 g of the lithium metal composite oxide powder was added to 50 ml of 0.2 wt% aqueous solution of sodium hexametaphosphate, thereby obtaining a dispersion with the powder dispersed therein. The obtained dispersion was subjected to a particle size distribution measurement using a laser scattering particle size distribution measuring apparatus (Mastersizer 2000, manufactured by Malvern Instruments Ltd.), whereby the volume-based cumulative particle size distribution curve was obtained. In the cumulative particle size distribution curve obtained, the volume-based particle diameter at a 50% cumulation was determined as the 50% cumulative volumetric particle diameter $D_{50}$ of the lithium metal composite oxide powder. Further, in the cumulative particle size distribution curve obtained, the volume-based particle diameter at a 10% cumulation was determined as the 10% cumulative volumetric particle diameter $D_{10}$ of the lithium metal composite oxide powder. Furthermore, in the cumulative particle size distribution curve obtained, the volume-based particle diameter at a 90% cumulation was determined as the 90% cumulative volumetric particle diameter $D_{90}$ of the lithium metal composite oxide powder.

<Water Content>

With respect to 1 g of the lithium metal composite oxide powder, the water content of the lithium metal composite oxide was measured using a coulometric Karl Fischer moisture meter (831 Coulometer, manufactured by Metrohm).

<Electrode Coatability Test>

A lithium metal composite oxide powder obtained by the production method described below, a conductive material (acetylene black), and a binder (PVdF) were mixed and kneaded so as to obtain a composition wherein positive electrode active material : conductive material : binder = 92 : 5 : 3 (mass ratio), thereby preparing a paste-like positive electrode mix. The binder (PVdF) used was one prepared using N-methyl-2-pyrrolidone as a solvent so as to adjust the binder concentration to 5 % by mass.

The obtained paste-like positive electrode mix was applied to a 40μm-thick Al foil as a current collector, using an auto-applicator, dried at 60 °C for 5 hours, and pressed at a linear pressure of 120 kN/m. The resulting was vacuum-dried at 150 °C for 8 hours to obtain a positive electrode for a lithium secondary battery.

The electrode area of the positive electrode for a lithium secondary battery was set to 1.65 cm$^2$ and the thickness of the paste-like positive electrode mix was adjusted so that the amount of the positive electrode mix applied to the electrode was 10 ± 1 mg/cm$^2$.

The film thickness of the obtained electrodes was measured by a micrometer at five points. The measurement points were selected so that the film thicknesses were uniformly distributed for the same electrode surface. An average electrode film thickness was calculated from the obtained five values of the electrode film thickness, and the coatability of the electrodes was judged to be high when no measured value at the measurement points exceeded ±2 μm from the average electrode film thickness, and judged to be low when any measured value at the measurement points exceeded ±2 μm.

In Table 1, high electrode coatability is indicated as "A", while low electrode coatability is indicated as "B".

«Example 1>>

1. Production of Positive Electrode Active Material 1

Into a reaction vessel equipped with a stirrer and an overflow pipe was charged water, followed by addition of an aqueous sodium hydroxide solution. The temperature of the resulting liquid was maintained at 50 °C.

An aqueous nickel sulfate solution, an aqueous cobalt sulfate solution and an aqueous manganese sulfate solution were mixed together such that the atomic ratio between nickel atoms, cobalt atoms and manganese atoms became 0.60:0.20:0.20, to thereby prepare a raw material mixture solution.

Then, the obtained raw material mixture solution and an aqueous ammonium sulfate solution as a complexing agent were continuously added to the reaction vessel with stirring, and nitrogen gas was continuously passed through the reaction vessel. An aqueous solution of sodium hydroxide was dropwise added to the reaction vessel at an appropriate timing such that the pH of the solution in the reaction vessel became 11.7, thereby obtaining nickel-cobalt-manganese composite hydroxide particles. The obtained particles were washed, dehydrated by a centrifugal separator, washed, dehydrated, separated and dried at 105 °C to obtain a nickel-cobalt-manganese composite hydroxide 1.

The nickel-cobalt-manganese composite hydroxide powder 1, a lithium carbonate powder and a potassium sulfate powder were weighed such that Li/(Ni + Co + Mn) = 1.20 and $K_2SO_4$/(Li$_2$CO$_3$ + $K_2SO_4$) = 0.10 (molar ratio), followed by mixing. The resulting was calcined in ambient atmosphere at 900 °C for 8 hours, thereby obtaining a lithium metal composite oxide powder. The obtained powder and pure water were mixed such that the mass ratio of the powder to the resulting mixture is 0.3, thereby obtaining a slurry. The slurry was stirred for 20 minutes, followed by dehydration, separation and drying at 105 °C to obtain a positive electrode active material 1.

Evaluation of Positive Electrode Active Material 1

The composition analysis of the obtained positive electrode active material 1 was performed and the results were applied to the formula (1). As a result, it was found that x = 0.03, y = 0.20, z = 0.20, and w = 0.00.

With respect to the positive electrode active material 1, the results of measurement or evaluation of BET specific surface area, average primary particle diameter (described as "primary particle diameter" in Table 1), ratio of alkali metal content (% by mass) other than lithium to sulfate group content (% by mass), lithium carbonate content (% by mass), lithium hydroxide content (% by mass), alkali metal content (% by mass) excluding lithium, $D_{50}$, ($D_{90}$ - $D_{10}$)/$D_{50}$, value obtained by dividing the water content by the BET specific surface area (% by mass$g$/m$^2$), and electrode coatability (described as "coatability" in Table 1) are shown in Table 1. (Likewise, the results of Examples 2 to 3 and Comparative Examples 1 to 3 are also shown in Table 1).

«Example 2>>

The nickel-cobalt-manganese composite hydroxide powder 1, a lithium carbonate powder and a potassium sulfate powder were weighed such that Li/(Ni + Co + Mn) = 1.20 and $K_2SO_4$/(Li$_2$CO$_3$ + $K_2SO_4$) = 0.10 (molar ratio), followed by mixing. The resulting was calcined in ambient atmosphere at 925 °C for 8 hours, thereby obtaining a lithium metal composite oxide powder. The obtained powder and pure water were mixed such that the mass ratio of the powder to the resulting mixture was 0.3, thereby obtaining a slurry. The slurry was stirred for 20 minutes, followed by dehydration, separation and drying at 105 °C to obtain a positive electrode active material 2.

Evaluation of Positive Electrode Active Material 2

The composition analysis of the obtained positive electrode active material 2 was performed and the results were applied to the formula (1). As a result, it was found that x = 0.02, y = 0.20, z = 0.20, and w = 0.00.

<<Example 3>>

1. Production of Positive Electrode Active Material 3

Into a reaction vessel equipped with a stirrer and an overflow pipe was charged water, followed by addition of an aqueous sodium hydroxide solution. The temperature of the resulting liquid was maintained at 50 °C.

An aqueous nickel sulfate solution, an aqueous cobalt sulfate solution and an aqueous aluminum sulfate solution were mixed together such that the atomic ratio between nickel atoms, cobalt atoms and aluminum atoms became 0.90 : 0.07 : 0.03, to thereby prepare a raw material mixture solution.

Then, the obtained raw material mixture solution and an aqueous ammonium sulfate solution as a complexing agent were continuously added to the reaction vessel with stirring, and nitrogen gas was continuously passed through the reaction vessel. An aqueous solution of sodium hydroxide was dropwise added to the reaction vessel at an appropriate timing such that the pH of the solution in the reaction vessel became 11.4, thereby obtaining nickel-cobalt-aluminum composite hydroxide particles. The obtained particles were washed, dehydrated by a centrifugal separator, washed, dehydrated, separated and dried at 105 °C to obtain a nickel-cobalt-aluminum composite hydroxide 2.

The nickel-cobalt-aluminum composite hydroxide powder 2, a lithium hydroxide monohydrate powder and a potassium sulfate powder were weighed such that Li/(Ni + Co + Al) = 1.20 and $K_2SO_4$/(LiOH + $K_2SO_4$) = 0.10 (molar ratio), followed by mixing. The resulting was calcined in an oxygen atmosphere at 840 °C for 8 hours, thereby obtaining a lithium metal composite oxide powder. The obtained powder and pure water were mixed such that the mass ratio of the powder to the resulting mixture was 0.4, thereby obtaining a slurry. The slurry was stirred for 20 minutes, followed by dehydration, separation and drying at 105 °C to obtain a positive electrode active material 3.

Evaluation of Positive Electrode Active Material 3

The composition analysis of the obtained positive electrode active material 3 was performed and the results were applied to the formula (1). As a result, it was found that x = 0.01, y = 0.07, z = 0.00, and w = 0.03.

<<Comparative Example 1>>

1. Production of Positive Electrode Active Material 4

A positive electrode active material 4 was produced following the same procedure as in Example 1, except that the potassium sulfate powder was not added.

2. Evaluation of Positive Electrode Active Material 4

The composition analysis of the positive electrode active material 4 was performed and the results were applied to the formula (1). As a result, it was found that x = 0.02, y = 0.20, z = 0.20, and w = 0.00.

«Comparative Example 2»

The nickel-cobalt-manganese composite hydroxide 1 and a lithium carbonate powder were weighed such that Li/(Ni + Co + Mn) = 1.20, followed by mixing. The resulting was calcined in ambient atmosphere at 925 °C for 8 hours, thereby obtaining a lithium metal composite oxide powder. The obtained powder and pure water were mixed such that the mass ratio of the powder to the resulting mixture was 0.2, thereby obtaining a slurry. The slurry was stirred for 20 minutes, followed by dehydration, separation and drying at 105 °C to obtain a positive electrode active material 5.

Evaluation of Positive Electrode Active Material 5

The composition analysis of the obtained positive electrode active material 5 was performed and the results were applied to the formula (1). As a result, it was found that x = 0.02, y = 0.20, z = 0.20, and w = 0.00.

«Comparative Example 3»

The nickel-cobalt-aluminum composite hydroxide powder 2, a lithium hydroxide monohydrate powder and a potassium sulfate powder were weighed such that Li/(Ni + Co + Al) = 1.20 and $K_2SO_4$/(LiOH + $K_2SO_4$) = 0.10 (molar ratio), followed by mixing. The resulting was calcined in an oxygen atmosphere at 840 °C for 8 hours, thereby obtaining a lithium metal composite oxide powder. The obtained powder and pure water were mixed such that the mass ratio of the powder to the resulting mixture was 0.5, thereby obtaining a slurry. The slurry was stirred for 20 minutes, followed by dehydration, separation and drying at 105 °C to obtain a positive electrode active material 6.

Evaluation of Positive Electrode Active Material 6

The composition analysis of the obtained positive electrode active material 6 was performed and the results were applied to the formula (1). As a result, it was found that x = 0.12, y = 0.07, z = 0.00, and w = 0.03.

[Table 1]

| | X | Y | Z | W | BET specific surface area ($m^2/g$) | Primary particle diameter ($\mu m$) | Alkali / sulfate radical | Residual Li | | Alkali content excluding Li | $D_{50}$ | $(D_{90}-D_{10})/D_{50}$ | $H_2O$/BET | Coatability |
|---|---|---|---|---|---|---|---|---|---|---|---|---|---|---|
| | | | | | | | | $Li_2CO_3$ | LiOH | | | | | |
| Ex.1 | 0.03 | 0.20 | 0.20 | 0.00 | 1.6 | 2.3 | 1.0 | 0.62 | 0.01 | 0.0018 | 3.8 | 2.44 | 0.0144 | A |
| Ex.2 | 0.02 | 0.20 | 0.20 | 0.00 | 1.0 | 1.9 | 17.1 | 0.5 | 0.05 | 0.0053 | 4.6 | 2.39 | 0.0340 | A |
| Ex.3 | 0.01 | 0.07 | 0.00 | Al, 0.03 | 0.8 | 2.5 | 0.5 | 0.67 | 0.11 | 0.0128 | 3.2 | 1.88 | 0.1538 | A |
| Comp.Ex. 1 | 0.02 | 0.20 | 0.20 | 0.00 | 0.5 | 0.5 | 0.032 | 0.23 | 0.18 | 0.0015 | 3.7 | 3.51 | 0.0918 | B |
| Comp.Ex. 2 | 0.02 | 0.20 | 0.20 | 0.00 | 0.5 | 0.4 | 0.005 | 0.31 | 0.21 | 0.0021 | 5.2 | 1.35 | 0.0666 | B |
| Comp.Ex. 3 | 0.12 | 0.07 | 0.00 | Al, 0.03 | 0.8 | 0.3 | 0.1 | 1.02 | 0.32 | 0.3300 | 14.1 | 1.99 | 0.3038 | B |

As shown in the results shown in Table 1, the coatability in all of Examples 1 to 3 to which the present invention was applied was "A".

DESCRIPTION OF THE REFERENCE SIGNS

1    Separator
2    Positive electrode
3    Negative electrode
4    Electrode group
5    Battery can
6    Electrolytic liquid
7    Top insulator
8    Sealing body
10   Lithium secondary battery
21   Positive electrode lead
31   Negative electrode lead

**Claims**

1. A lithium metal composite oxide powder comprising primary particles only or primary particles and secondary particles that are aggregates of the primary particles,
   wherein the lithium metal composite oxide is represented by composition formula (1) and satisfies all of requirements (A), (B) and (C):

$$Li[Li_x(Ni_{(1-y-z-w)}Co_yMn_zM_w)_{1-x}]O_2 \qquad (1)$$

   wherein M is one or more metallic elements selected from the group consisting of Fe, Cu, Ti, Mg, Al, W, B, Mo, Nb, Zn, Sn, Zr, Ga, La and V, $-0.1 \leq x \leq 0 \leq 0.2$, $0 \leq y \leq 0.4$, $0 \leq z \leq 0.4$, and $0 \leq w \leq 0.1$;

   (A) a BET specific surface area is less than 2 $m^2/g$;
   (B) an average particle diameter of the primary particles is 1 $\mu m$ or more; and
   (C) a ratio of an alkali metal content (% by mass) excluding lithium based on a total mass of the lithium metal composite oxide powder is 0.1 or more and less than 50 with respect to a sulfate radical content (% by mass) based on a total mass of the lithium metal composite oxide powder.

2. The lithium metal composite oxide powder according to claim 1, wherein a lithium carbonate content in residual alkali of the lithium metal composite oxide powder as measured by neutralization titration is 0.7 % by mass or less, based on a total mass of the lithium metal composite oxide powder, and a lithium hydroxide content in residual alkali of the lithium metal composite oxide powder as measured by neutralization titration is 0.7 % by mass or less, based on a total mass of the lithium metal composite oxide powder.

3. The lithium metal composite oxide powder according to claim 1 or 2, wherein the alkali metal content excluding lithium based on a total mass of the lithium metal composite oxide powder is 0.001 % by mass or more and 0.05 % by mass or less.

4. The lithium metal composite oxide powder according to any one of claims 1 to 3, wherein, with respect to 10 % cumulative diameter ($D_{10}$), 50 % cumulative diameter ($D_{50}$) and 90 % cumulative diameter ($D_{90}$) determined from particle size distribution measurement values, the 50 % cumulative diameter ($D_{50}$) is 2 $\mu m$ or more and 15 $\mu m$ or less, and a relationship of formula (D) is satisfied:

$$0.8 \leq (D_{90} - D_{10})/D_{50} \leq 3.5 \quad (D).$$

5. The lithium metal composite oxide powder according to any one of claims 1 to 4, wherein a value obtained by dividing a water content (% by mass), based on a total mass of the lithium metal composite oxide powder, by the BET specific surface area ($m^2/g$) is 0.005 or more and 0.5 or less.

6. A positive electrode active material for a lithium secondary battery, comprising the lithium metal composite oxide powder of any one of claims 1 to 5.

7. A positive electrode comprising a positive electrode active material of claim 6.

8. A lithium secondary battery comprising the positive electrode of claim 7.

FIG. 1A

FIG. 1B

## INTERNATIONAL SEARCH REPORT

| International application No. |
|---|
| PCT/JP2019/010275 |

### A. CLASSIFICATION OF SUBJECT MATTER
Int.Cl. H01M4/525(2010.01)i, C01G53/00(2006.01)i, H01M4/505(2010.01)i

According to International Patent Classification (IPC) or to both national classification and IPC

### B. FIELDS SEARCHED

Minimum documentation searched (classification system followed by classification symbols)
Int.Cl. H01M4/525, C01G53/00, H01M4/505

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-026455 A (SUMITOMO METAL MINING CO., LTD.) 05 February 2015, claims, paragraphs [0034]–[0048], [0058]–[0062], [0130], examples & US 2016/0164093 A1, claims, paragraphs [0037]–[0050], [0062]–[0066], [0139], examples & EP 3026739 A1 & CN 105474439 A & KR 10-2016-0037947 A | 1, 3, 6–8<br>2, 4, 5 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 March 2019 (29.03.2019) | 09 April 2019 (09.04.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2019/010275 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | WO 2015/182665 A1 (SUMITOMO CHEMICAL CO., LTD.) 03 December 2015, paragraphs [0037], [0043], [0044] & US 2017/0187031 A1, paragraphs [0048], [0057], [0058] & EP 3151316 A1 & KR 10-2017-0009876 A & CN 106463721 A | 2, 4 |
| Y | JP 10-208728 A (NIPPON CHEMICAL INDUSTRIAL CO., LTD.) 07 August 1998, paragraph [0012] (Family: none) | 2 |
| Y | JP 04-056064 A (SONY CORP.) 24 February 1992, page 1, lower right column to page 2, upper left column & EP 462575 A2, page 2, lines 30-41 | 2 |
| Y | JP 2017-228516 A (SUMITOMO METAL MINING CO., LTD.) 28 December 2017, paragraphs [0038]-[0042], [0053], [0054] & CN 109155413 A | 2, 5 |

Form PCT/ISA/210 (continuation of second sheet) (January 2015)

**EP 3 767 719 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045954 A
- JP 2015122269 A
- JP 2011124086 A
- JP 2002201028 A